# EUROPÄISCHE PATENTSCHRIFT

(11) **EP 1 312 826 B1**
(45) Veröffentlichungstag und Bekanntmachung des Hinweises auf die Patenterteilung: **08.03.2006**
(21) Anmeldenummer: 02024397.8
(22) Anmeldetag: 04.11.2002
(51) Int. Cl.: F16F 1/32, F16F 13/00, E01C 3/06

(54) **Hydraulisches Federelement**
Hydraulic spring element
Unité de ressort hydraulique

(30) Priorität: 12.11.2001 DE 10155183
(43) Veröffentlichungstag der Anmeldung: 21.05.2003
(73) Patentinhaber: Bosch Rexroth AG, 97816 Lohr (DE)
(72) Erfinder: Försterling, Heino, 97816 Lohr (DE)
(74) Vertreter: Winter, Brandl, Fürniss, Hübner Röss, Kaiser, Polte Partnerschaft Patent- und Rechtsanwaltskanzlei

(56) Entgegenhaltungen:
- WO-A-99/17033
- CH-A- 614 256
- DE-B- 1 122 845
- DE-B- 1 132 008
- DE-C- 468 320
- DE-U- 1 754 480
- FR-A- 1 285 095
- FR-A- 1 290 310
- SU-A- 1 573 253
- US-A- 2 103 946
- US-A- 3 243 154
- US-A- 3 873 079
- US-A- 5 669 598

## Beschreibung

Die Erfindung betrifft ein hydraulisches Federelement gemäß dem Oberbegriff des Patentanspruchs 1.

Ein derartiges hydraulisches Federelement kann in Form eines Hydrozylinders ausgeführt sein. Wirkt auf diesen eine nach Größe und Richtung veränderliche Kraft, so kann dies durch die Elastizität des Druckmittels, des Zylinders und der Leitungen zu erzwungenen Schwingungen führen. Die Eigenfrequenz eines derartigen Feder-Masse-Systems hängt von einer hydraulischen Federkonstanten und von der bewegten Masse (beispielsweise Kolben und angetriebene Massen) ab. Eine Resonanz tritt im System auf, wenn die Erregerfrequenz durch die veränderliche Kraft mit der Eigenfrequenz des Systems zusammenfällt.

Derartige gattungsgemäße Federelemente (Siche Z.B. DE-G-468320) werden beispielsweise bei Gleiskörpern zur Isolation der von Schienenfahrzeugen erzeugten Schwingungen eingesetzt. Dabei sind die Schienen auf einer Betonplatte angeordnet, die Ihrerseits über Federelemente, beispielsweise Schraubenfedern, abgestützt ist. Nachteilig bei derartigen mit Schraubenfedern abgestützten Systemen ist, daß - abgesehen von vernachlässigbarer Materialdämpfung - prinzipbedingt keinerlei Dämpfung vorhanden ist und somit niederfrequente Erregerschwingungen im Bereich der Eigenfrequenz zu Resonanzüberhöhungen führen. Es ist daher erforderlich, den Federelementen Dämpfer parallel zu schalten, was vorrichtungstechnischen Aufwand erfordert und zudem die Isolationswirkung vermindert.

Der Ersatz der Federelemente durch die eingangs genannten Hydrozylinder ist nur schwierig möglich, da zum einen die für die Kolbenstangen erforderlichen Dichtungen eine erhebliche Reibung verursachen und aufgrund von möglichen Leckagen ein erheblicher Wartungsaufwand erforderlich ist, um die Dämpfungs-/Federwirkung über einen langen Zeitraum aufrechtzuerhalten.

Demgegenüber liegt der Erfindung die Aufgabe zugrunde, ein einfach aufgebautes hydraulisches Federelement zu schaffen, bei dem die Reibung und eventuelle Leckageprobleme verringert sind und welches zudem die Möglichkeit vorzugsweise einstellbarer Dämpfungswirkung bietet. Das Federelement soll auch bei Schwingungsschutzsystemen einsetzbar sein.

Einzelnen Merkmalen von Ausführungsbeispielen der Erfindung tufolge bildet das hydraulische Federelement einen Zylinderraum, der mit einem Druckmittel gefüllt ist. Dieses Druckmittel wird über eine Druckmittelquelle oder einen Druckmittelspeicher mit einem Druck beaufschlagt. Die mechanischen Federelemente werden mittels Spanneinrichtung mit einer vorspannung versehen, so daß die übertragbare Stützkraft zum einen vom Hydraulikdruck und zum anderen von der Federkennlinie des Federelementes und der Vorspannung abhängt. Die erfindungsgemäße Federeinrichtung bildet somit praktisch einen Hydrozylinder ohne Kolben, bei dem die Ein-und Ausfahrbewegung durch entsprechende axiale Verkürzung bzw. Verlängerung des Federelementes erreicht wird. Die äußerst kompakte Konstruktion der erfindungsgemäßen Federeinrichtung ermöglicht den Einsatz in Schwingungsschutzsystemen, beispielsweise für Gleisanlagen und Fahrwege.

Erfindungsgemäß ist das Federelement durch ein Federpaket mit tellerfederartigen Einzelelementen gebildet, die über ringförmige Dichteinrichtungen und Vorzugsweise Stützringe miteinander verbunden sind. Diese Dichteinrichtungen und Stützringe weisen vorzugsweise in Radialrichtung eine Elastizität auf, so daß die mit einer Axialbewegung des Tellerfederpaketes einhergehenden Radialbewegungen ausgeglichen werden und somit auch bei großen Hüben eine Dichtigkeit gewährleistet ist.

Die erfindungsgemäße Federeinrichtung verfügt über eine Deck- und eine Bodenplatte die den Zylinderraum stirnseitig abschliessen und in denen vorzugsweise auch die hydraulischen Anschlüsse untergebracht werden. Die Deck- und Bodenplatte sind über die vors panneinrichtung miteinander verbunden, über die die eingangs genannte Vorspannung aufbringbar ist.

Der Zusammenhalt der Federelemente kann alternativ bzw. zusätzlich (bei höherem als durch die Federvorspannung zugelassenem Innendruck) durch ringförmige Klemmelemente realisiert werden, die jeweils zwei mittelbar (bei Verwendung von Stützringen) oder unmittelbar kontaktierende Federelemente insbesondere am äußeren Rand umschliessen.

Bei einer alternativen Variante sind zwei Federelemente durch eine Zwischenplatte voneinander getrennt, auf der die Last abgestützt ist. Bei der vorbeschriebenen Variante sind eine Deck- und eine Bodenplatte mittels der Spanneinrichtung miteinander verbunden. Diese Konstruktion entspricht in der Funktion einem Gleichgangzylinder.

Das im Zylinderraum aufgenommene Druckmittel weist eine äußerst geringe Dämpfung auf. Diese kann verbessert werden, indem der Zylinderraum über eine Drossel, vorzugsweise eine einstellbare Drossel mit einer Druckmittelquelle bzw. einem Hydrospeicher verbunden ist. Bei der als Gleichgangzylinder wirkenden Variante werden die beiden von den Federelementen begrenzten Zylinderräume über eine Drossel (vorzugsweise einstellbar) miteinander verbunden.

Die vorgenannten Dichteinrichtungen können zwischen den Tellerfedern oder radial aussen - oder innenliegend angeordnet sein.

Zur Entkopplung von Körperschall können geeignete Maßnahmen, bspw. das Vorsehen einer Zwischenlage aus elastischem Material getroffen werden.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert.

Es zeigen:
Fig. 1 ein erstes Ausführungsbeispiel einer erfindungsgemäßen Federeinrichtung;
Fig. 2 ein weiteres Ausführungsbeispiel, das in der Funktion einem Gleichgangzylinder entspricht;
Fig. 3 und 4 Ausführungsbeispiele mit einer Klemmeinrichtung und
Fig. 5 ein Ausführungsbeispiel mit radialer Dichtungsanordnung.

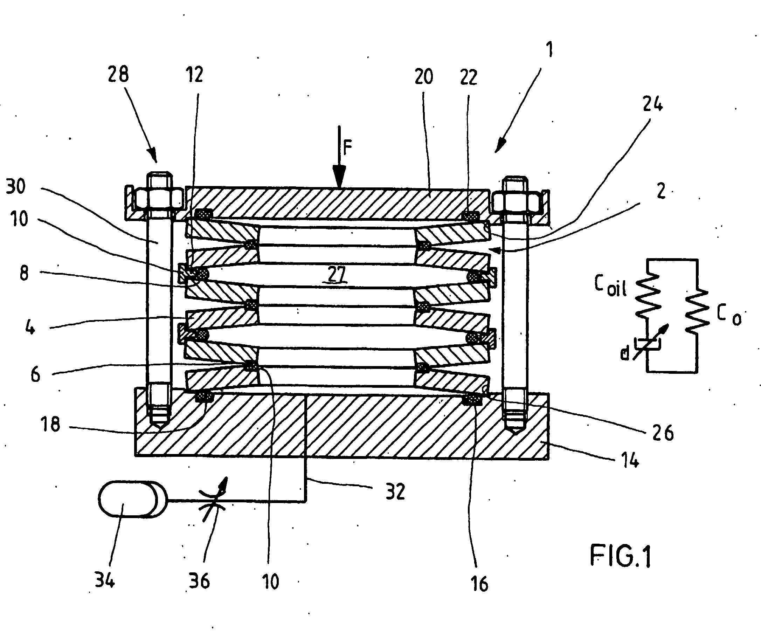

Fig. 1 zeigt in stark vereinfachter Form ein Ausführungsbeispiel einer hydraulischen Federeinrichtung 1, die in der Funktion einem Hydrozylinder entspricht. Die Federeinrichtung 1 hat ein Federelement 2, das beim dargestellten Ausführungsbeispiel durch ein Paket von Tellerfedern 4 gebildet ist. Wie bei Tellerfederpaketen üblich, sind die einzelnen Tellerfedern 4 aufeinanderfolgend um 180 Grad zueinander versetzt angeordnet, so daß benachbarte Tellerfedern 4 entweder mit ihren Innenumfangskanten oder mit ihren Außenumfangskanten mittelbar oder unmittelbar aneinander anliegen.

Beim dargestellten Ausführungsbeispiel sind in den durch Innenumfangskanten der Tellerfedern 4 gebildeten Anlagebereichen Innenringdichtungen 6 und in den äußeren Anlagebereichen Außenringdichtungen 8 angeordnet. Zur besseren Lagefixierung der Dichtungen 6, 8 können in den inneren und/oder äußeren Anlagenbereichen Ringnuten 9 vorgesehen werden. Benachbarte Federteller 4 werden in Radialrichtung an Stützringen 10 abgestützt, die die außen liegenden Anlagebereiche der benachbarten Tellerfedern umgreifen. Bei der in Fig. 1 dargestellten Variante hat der Stützring 10 einen radial innenliegenden Steg 12, der sich zwischen den äußeren Umfangskanten benachbarter Tellerfederelemente 4 erstreckt, so daß diese nicht direkt aufeinanderliegen. Die Dichtung 8 ist dabei in Radialrichtung am Stützring abgestützt. In ähnlicher Weise kann auch bei der Innenringabdichtung verfahren werden, wobei hier sowohl die Möglichkeit der axialen wie auch der radialen Abdichtung gegeben ist.

Das Tellerfederpaket ist auf einer Bodenplatte 14 abgestützt, wobei in einer Ringnut 16 eine Stirndichtung 18 angeordnet ist, auf der die in Fig. 1 untere Tellerfeder aufliegt.

Den oberen Abschluß der Federeinrichtung 1 bildet eine Deckplatte 20, in der ebenfalls eine Stirndichtung 22 aufgenommen ist. Sowohl die Deckplatte 20 als auch die Bodenplatte 14 haben eine in Axialrichtung vorspringende Schulter 24, 26, an der jeweils die Umfangskanten der oberen bzw. unteren Tellerfeder 4 abgestützt sind. Diese Schultern werden konstruktiv derart ausgebildet, daß sie über ausreichende radiale Elastizität verfügen, um die Verformung der Tellerfeder nicht unzulässig zu behindern. Diese Elastizität kann auch durch ähnliche Elemente, wie sie im Außenbereich der Tellerferdern Verwendung finden (Stützring 10) eingebracht werden, welche dann gleichzeitig den Raum zur Aufnahme der Dichtungen bereitstellen. Durch die Tellerfedern 4, die Deckplatte 20 und die Bodenplatte 14 wird ein Zylinderraum 27 gebildet, der über die Dichtungen 6, 8, 18 und 22 nach außen hin abgedichtet ist.

Die Deckplatte 20 und die Bodenplatte 14 (die konstruktiv auch identisch ausgeführt werden können) sind über eine Vorspanneinrichtung 28 miteinander verbunden, so daß die Tellerfedern 4 mit einer Vorspannung beaufschlagbar sind. Beim dargestellten Ausführungsbeispiel hat die Vorspanneinrichtung 28 mehrere Spannschrauben 30, über die der Axialabstand der beiden Platten 14, 20 einstellbar ist.

Alternativ bzw. zusätzlich können die Einzelfedern durch ringförmige Klemmelemente realisiert werden, die jeweils zwei mittelbar (bei Verwendung von Stützringen) oder unmittelbar kontaktierende Federelemente insbesondere am äußeren Rand umschließen.

Gemäß der Darstellung in Fig. 1 ist der Zylinderraum 27 über eine Druckmittelleitung 32 mit einem Hydrospeicher 34 verbunden. Im Leitungsabschnitt zwischen dem Zylinderraum 27 und dem Hydrospeicher 34 ist eine einstellbare Drossel 36 vorgesehen, deren wirksamer Durchmesser in Abhängigkeit von den zu dämpfenden Schwingungen einstellbar ist.

In Fig. 1 rechts ist das mechanische Ersatzsystem der vorgeschriebenen Federeinrichtung dargestellt. Dieses Ersatzsystem ist durch die Federkonstante c₀ des Tellerfederpaketes, die Federkonstante des Druckmittels cₒᵢₗ sowie die Dämpfung d der Drossel 36 charakterisiert, wobei die innere Dämpfung (Fluid- bzw. Materialdämpfung, etc.) vernachlässigt ist. Gemäß dem Ersatzsystem berechnet sich die Federkonstante des Gesamtsystems nach einer Parallelschaltung der Tellerfedern mit der Federkonstanten des Druckmittels und der Dämpfung über die Drossel 36.

Die dargestellte hydraulische Federeinrichtung 1 wird von einer Kraft F belastet, die beispielsweise durch das Gewicht einer Gleisanlagen oder Fahrwege tragenden Betonplatte gebildet ist. Beim Befahren der Gleisanlage mit einem Fahrzeug, beispielsweise einer U-Bahn, einer Straßenbahn, einer Hochbahn, werden die von dem Fahrzeug erzeugten höherfrequenten Kraftschwingungen durch die Isolationswirkung des Feder-Masse-Systems (bestehend aus Betonplatte und hydraulischem Federelement) getilgt und somit nicht in das Fundament eingeleitet und damit auch nicht auf die benachbarten Bauwerke übertragen werden. Bei sehr hochfrequenten Schwingungen wird das Druckmittel, welches sich im Zylinderraum und in der Rohrleitung bis zur Drossel befindet komprimiert, so daß das System als "Ölfeder" wirkt - die Dämpfung ist bei hohen Frequenzen minimal.

Bei niederfrequenten Schwingungen im Bereich der Eigenfrequenz des Gesamtsystems erfolgt über die Drossel 36 eine Dämpfung, wobei die Dämpfungswirkung durch die Öffnung der Drossel 36 variiert werden kann. Die Abstimmung der Eigenfrequenz des Feder-Masse-Systems kann durch Vorsehen eines zusätzlichen Totvolumens angepaßt werden. Alternativ kann die Eigenfrequenz auch durch das Einbringen von zusätzlichen elastischen Elementen, insbesondere im Bereich der den Zylinderraum umschließenden Wandungen, beeinflußt werden (z. B. Metallmembrane).

Im Bereich der Eigenfrequenz des Gesamtsystems kann somit eine Resonanzüberhöhung durch die Dämpfungswirkung vermieden werden, die bei höheren Frequenzen unwirksam wird und somit die gewünschte Isolationswirkung nicht beeinträchtigt. Prinzipiell könnte oberhalb der Eigenfrequenz auch die Drossel 36 zugesteuert werden, da durch diese dann praktisch kein Ölfluß mehr stattfindet.

Es liegt auf der Hand, daß eine derartiges System besonders gut zum Schutz benachbarter Bauwerke eingesetzt werden kann, wobei der einfache Aufbau des Feder-/Dämpfungselementes mit den sehr robusten Tellerfedern, einem Hydrospeicher und der einstellbaren Drossel einen praktisch wartungsfreien Betrieb erlaubt. Zur Vermeidung von Körperschallübertragung können zwischen dem hydraulischen Federelement und dem Fundament bzw. dem zu isolierenden Bauelement zusätzlich elastische Zwischenschichten (Elastomere/PU, Korkgummilagen, etc.) eingebracht werden.

Die übertragbaren Sützkräfte lassen sich auf einfache Weise hydraulisch durch Einstellen des Drucks im Hydrospeicher 34 und mechanisch durch Anpassung der Vorspanneinrichtung 28 variieren.

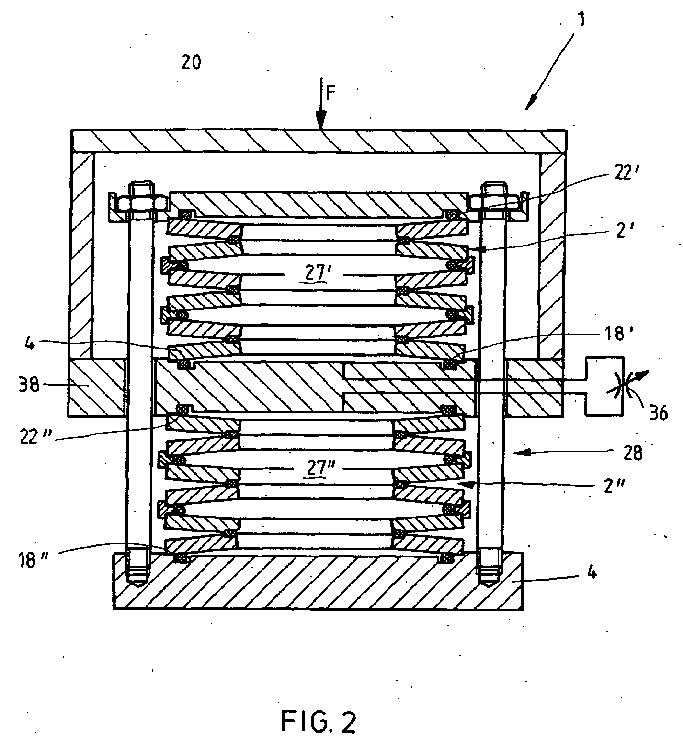

In Fig. 2 ist eine Variante einer Federeinrichtung 1 dargestellt, die die Funktion eines Gleichgangzylinders hat und damit auch die Einleitung von Wechselkräften zuläßt. Dieses Ausführungsbeispiel hat zwei Federelemente 2', 2' ', deren Grundaufbau dem Tellerfeder-Paket aus Fig. 1 entspricht, so daß diesbezügliche Erläuterungen entbehrlich sind. Das untere Federelement 2" ist auf der Bodenplatte 14 abgestützt. Die obere Tellerfeder des Federelements 2" liegt an einer Zwischenplatte 38 an, an der die Stirndichtung 22' abgestützt ist. Die untere Stirndichtung 18 des Federelementes 2" ist an der Bodenplatte 14 gehalten.

Die in Fig. 2 untere Tellerfeder 4 des Federelementes 2' liegt auf der Zwischenplatte 38 auf und ist über eine Stirndichtung 18' nach außen hin abgedichtet. Die obere Tellerfeder 4 ist an der Stirndichtung 22' der tragenden Deckplatte 20 abgestützt.

Ähnlich wie beim vorbeschriebenen Ausführungsbeispiel sind die Deckplatte 20 und die Bodenplatte 4 über eine Vorspanneinrichtung 28 miteinander verbunden, wobei diese die Zwischenplatte 38 durchsetzt. Über diese Vorspanneinrichtung 28 lassen sich die beiden Federelemente 2' und 2'' mit einer Vorspannung beaufschlagen. Die Krafteinleitung - vorzugsweise bei Anwendungen mit wechselnder Kraftrichtung, erfolgt über die Zwischenplatte 38. Die abzustützende Kraft, beispielsweise die Betonplatte einer Gleisanlage, liegt auf der Zwischenplatte 38 auf.

Durch die Deckplatte 20, das Federelement 2'' und die Zwischenplatte 38 sowie die Bodenplatte 14, das Federelement 2' und die Zwischenplatte 38 wird ein Federraum 27" bzw. 27' begrenzt. Diese sind über die Drossel 36 miteinander verbunden. Durch diese Variante können sowohl Zug- als auch Druckkräfte übertragen werden. Prinzipiell ist es möglich, die beiden Zylinderräume 27' und 27" zur Anpassung des Hydraulikdruckes mit einem Hydrospeicher oder einer sonstigen Druckmittelquelle zu verbinden.

Im übrigen entspricht die Funktion des in Fig. 2 dargestellten Ausführungsbeispiels derjenigen aus Fig. 1. Das heißt, auch bei dieser Variante erfolgt oberhalb der Eigenfrequenz des Systems praktisch keine Dämpfung, während im Bereich der Eigenfrequenz über die Drossel 36 die niedrigfrequenten Schwingungen gedämpft werden.

Die Federkonstanten der Federelemente 2', 2'' könnten unterschiedlich gewählt werden, so dass in Zug- und Druckrichtung ein unterschiedliches Dämpfungsverhalten einstellbar ist.

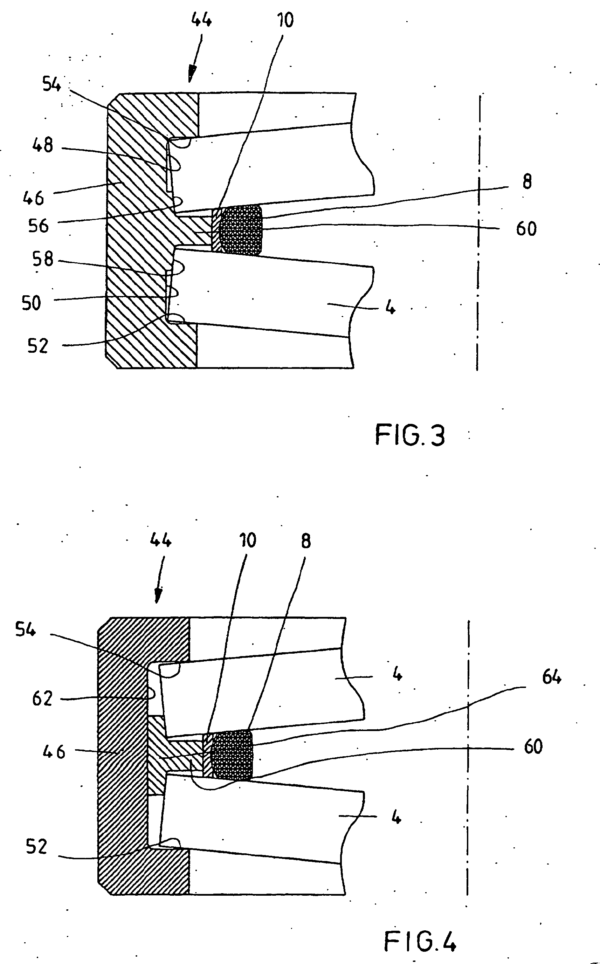

Bei den vorbeschriebenen Ausführungsbeispielen kann es vorkommen, daß im ungespannten Zustand, beispielsweise bei einem höheren als durch die Federvorspannung vorgegebene Innendruck, das Tellerfederpaket in Axialrichtung auseinander bewegt wird. Um dies zu vermeiden, wird bei den in den Figuren 3 und 4 dargestellten Ausführungsbeispielen eine Klemmeinrichtung 44 verwendet, um benachbarte Tellerfedern 4 entlang des Aussenumfangs (siehe Figur 3) und / oder auch entlang des Innenumfangs - nicht dargestellt - zusammenzuhalten. Die radial aussen liegende Klemmeinrichtung 44 ist bei höheren Drücken (Überschreiten der mechanischen Vorspannung) auf jeden Fall erforderlich. Die innere - nicht dargestellte - Klemmeinrichtung ist nicht unbedingt erforderlich, da die Tellerfedern 4 in diesem Bereich durch den Innendruck zusammengehalten werden.

Bei dem in Figur 3 dargestellten Ausführungsbeispiel hat die Klemmeinrichtung 44 einen Klemmring 46, der die Umfangskanten der beiden Tellerfedern 4 umgreift. Dazu sind im Klemmring zwei axialbeabstandete innere, ringförmige Klemmnuten 48, 50 ausgebildet, wobei die in Axialrichtung aussenliegenden Nutwangen 52, 54 die jeweils zugeordnete Tellerfeder 4 in Axialrichtung beaufschlagen, während zur radialen Abstützung eine Schrägschulter vorgesehen ist, an der die entsprechend schräg angestellte Aussenumfangsfläche der zugeordneten Tellerfeder 4 in Anlage bringbar ist.

Zwischen den beiden Klemmnuten 48, 50 ist ein radial zwischen die beiden benachbarten Tellerfedern 4 eintauchender Steg 60 ausgebildet, an dem ein Stützring 10 abgestützt ist, der wiederum die äußere Dichtung 8 trägt. Bei dem dargestellten Ausführungsbeispiel ist der Stützring 10 als einfacher Rechteckring ausgebildet und besteht aus PTFE.

Ein entsprechend ausgebildeter Klemmring könnte die vorgenannte innere Abstützung übernehmen.

Bei dem in Figur 4 dargestellten Ausführungsbeispiel ist der Klemmring 46 mit einer einzigen Innennut 62 ausgebildet, deren beiden Nutwangen 52, 54 - wie beim vorbeschriebenen Ausführungsbeispiel - die beiden Tellerfedern in Axialrichtung klemmen.

Die radiale Abstützung erfolgt über einen T-förmigen Aussenstützring 64 dessen Steg 60 - wie beim vorbeschriebenen Ausführungsbeispiel - einen Stützring 10 für die Dichtung 8 abstützt. Der Aussenstützring 64 ist mit seiner Aussenumfangsfläche am Boden der Innennut 62 des Klemmrings 46 abgestützt und beispielsweise aus Stahl gefertigt, während der innenliegende Stützring 10 wiederum aus PTFE hergestellt ist.

Mit den in den Figuren 3 und 4 dargestellten Klemmeinrichtungen können sogar Zugkräfte auf den Zylinder wirken.

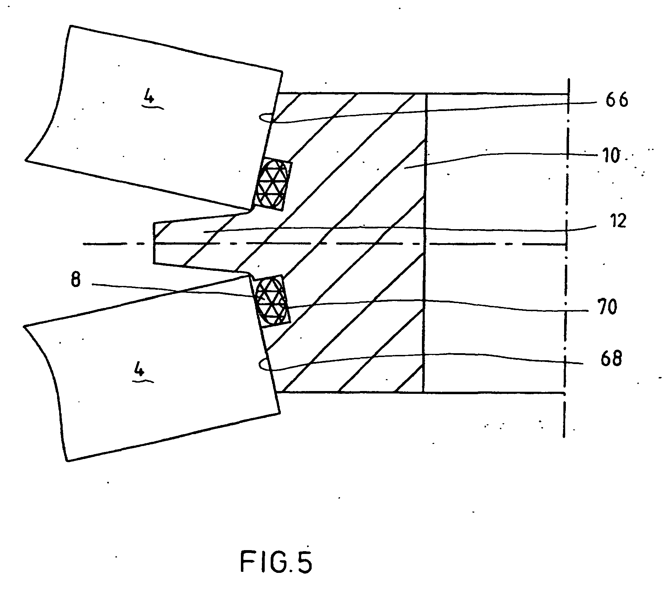

Bei den vorbeschriebenen Ausführungsbeispielen erfolgte die Dichtung zwischen den benachbarten Tellerfedern 4 über in Axialrichtung zwischen den beiden benachbarten Tellerfedern 4 eingespannten Dichtungen 6, 8. In Figur 5 ist ein Ausführungsbeispiel dargestellt, bei dem Dichtungen an den radial aussen- oder innenliegenden Umfangsflächen der Tellerfedern 4 angeordnet sind.

Bei der in Figur 5 dargestellten Variante ist der Stützring 10 mit jeweils zwei schräg angestellten Stützflächen 66, 68 ausgeführt, an denen die Aussenumfangsflächen der zugeordneten Tellerfeder 4 abgestützt sind. Zwischen den beiden Stützflächen 66, 68 verläuft ein Steg 12, über den die benachbarten Tellerfedern 4 zueinander in Axialrichtung beabstandet sind. In jeder der Stützflächen 66, 68 ist eine Dichtnut 70 ausgebildet, die jeweils eine Dichtung 8 aufnimmt, die somit in Radialrichtung gegen die benachbarte Tellerfeder 4 vorgespannt ist und somit in Radialrichtung abdichtet.

Beim Einbau der hydraulischen Feder können zusätzlich Körperschall entkoppelnde Maßnahmen getroffen werden. So ist es beispielsweise möglich, eine Zwischenlage aus elastischem Material (Elastomere / PU, Gummi etc.) vorzusehen, um eine Schallübertragung zwischen der hydraulischen Feder und der diese abstützende Bauteil beispielsweise einer Tragplatte zu minimieren.

Offenbart ist eine hydraulische Federeinrichtung mit einem ein Druckmittel aufnehmenden Zylinderraum, der durch ein Federelement gebildet ist. Dieses Federelement läßt sich mittels einer Vorspanneinrichtung vorspannen. Das Federelement ist durch ein Federpaket aus tellerfederartigen Elementen gebildet. Die hydraulische Federeinrichtung läßt sich besonders vorteilhaft bei Schwingungsschutzsystemen für Gleisanlagen und Fahrweg einsetzen.
- 1: Federeinrichtung
- 2: Federelement
- 4: Tellerfeder
- 6: Innenringdichtung
- 8: Dichtung
- 10: Stützring
- 12: Steg
- 14: Bodenplatte
- 16: Ringnut
- 18: Stirndichtung
- 20: Deckplatte
- 22: Stirndichtung
- 24: Schulter
- 26: Schulter
- 27: Zylinderraum
- 28: vorspanneinrichtung
- 30: Spannschrauben
- 32: Druckmittelleitung
- 34: Hydrospeicher
- 36: Drossel
- 38: Zwischenplatte
- 42: Zylinder
- 44: Klemmeinrichtung
- 46: Klemmring
- 48: Klemmnut
- 50: Klemmnut
- 52: Nutwange
- 54: Nutwange
- 56: Schrägschulter
- 58: Schrägschulter
- 60: Steg
- 62: Innennut
- 64: Aussenstützring
- 66: Stützfläche
- 68: Stützfläche
- 70: Dichtnut

## Patentansprüche

1. Hydraulische Federeinrichtung mit zumindest einem ein Druckmittel aufnehmenden Zylinderraum (27), der an einen Druckmittelspeicher (34) oder eine Druckmittelquelle angeschlossen ist, **gekennzeichnet durch** eine Vorspanneinrichtung (28), **durch** die ein den zumindest einen Zylinderraum (27) begrenzendes, ringförmiges Federelement (2) in Axialrichtung vorspannbar ist, und
**durch** eine Deckplatte (14) und eine Bodenplatte (20) zum stimseitigen Abschließen zumindest eines Zylinderraums (27), wobei die Deckplatte (14) und die Bodenplatte (20) über die Vorspanneinrichtung (28) miteinander verbunden sind,
wobei das Federelement (2) aus einem Federpaket gebildet ist, zwischen dessen tellerfederartigen Elementen (4) ringförmige Dichteinrichtungen (6, 8) angeordnet sind.

2. Hydraulische Federeinrichtung nach Patentanspruch 1, wobei die tellerfederartigen Elemente mittels Stützringen (10) miteinander verbunden sind.

3. Hydraulische Federeinrichtung nach Patentanspruch 1 oder 2, wobei die Dichteinrichtungen (6, 8) und die Stützringe (10) eine Elastizität in Radialrichtung aufweisen.

4. Hydraulische Federeinrichtung nach einem der vorhergehenden Patentansprüche, wobei der Zylinderraum (27) über eine Drossel (36) mit einem Hydrospeicher (34) verbunden ist.

5. Hydraulische Federeinrichtung nach einem der vorhergehenden Patentansprüche, wobei das Federelement in einer solchen Weise ausgestaltet ist, dass auf diesem eine Tragplatte eines Schwingungsschutzsystems für Gleisanlagen oder Fahrwege abstützbar ist.

6. Hydraulische Federeinrichtung nach einem der vorhergehenden Patentansprüche, mit einer Klemmeinrichtung (44) zum Klemmen zweier benachbarter Tellerfedern (4) zumindest in Axialrichtung.

7. Hydraulische Federeinrichtung nach Patentanspruch 2 und 6, wobei die Klemmeinrichtung (44) einen Innen- oder Aussenumfangsabschnitte der Tellerfedern (4) umgreifenden Klemmring (46) hat, an dem der Stützring (10) mittelbar oder unmittelbar abgestützt ist.

8. Hydraulische Federeinrichtung nach Patentanspruch 7, wobei am Klemmring (46) ein Aussenstützring zum Beabstanden der Tellerfedern (4) in Axialrichtung und/oder zum Stützen des Stützrings (10) abgestützt ist.

9. Hydraulische Federeinrichtung nach einem der Patentansprüche 2 bis 7, wobei Dichteinrichtungen (22) in Radialrichtung mit Bezug zu den Tellerfedern (4) angeordnet sind.

10. Hydraulische Federeinrichtung nach einem der vorhergehenden Ansprüche mit Dämpfungsmaterial zur Verringerung der Körperschallübertragung von benachbarten Bauelementen und auf benachbarte Bauelementen.

11. Schwingungsschutzsystem zur Dämpfung von über Fahrzeuge erzeugten Schwingungen mit einer Tragplatte, beispielsweise einer Betonplatte, die von zumindest einem federnden Stützelement getragen wird, **dadurch gekennzeichnet, daß** das Stützelement eine Federeinrichtung (1) gemäß einem der vorhergehenden Ansprüche ist.

## Claims

1. A hydraulic spring device having at least one cylinder chamber (27) which holds a pressure medium and which is connected to a pressure medium reservoir (34) or a pressure medium source, **characterised**
**by** a pre-tensioning device (28) by which an annular spring element (2) which defines the at least one cylinder chamber (27) can be pre-tensioned in the axial direction, and
by a top plate (14) and a bottom plate (20) for closing off the ends of at least one cylinder chamber (27), the top plate (14) and the bottom plate (20) being connected to each other via the pre-tensioning device (28),
wherein the spring element (2) is formed by a spring assembly between whose disc-spring-like elements (4) annular sealing devices (6, 8) are arranged.

2. A hydraulic spring device according to patent claim 1, wherein the disc-spring-like elements are connected to one another by means of support rings (10).

3. A hydraulic spring device according to patent claim 1 or 2, wherein the sealing devices (6, 8) and the support rings (10) have an elasticity in the radial direction.

4. A hydraulic spring device according to any one of the preceding patent claims, wherein the cylinder chamber (27) is connected to a hydraulic reservoir (34) *via* a restrictor (36).

5. A hydraulic spring device according to any one of the preceding patent claims, wherein the spring element is constructed in such a manner that a supporting plate of a vibration protection system for railways or roadways may be supported thereon.

6. A hydraulic spring device according to any one of the preceding patent claims, having a clamping device (44) for clamping two adjacent disc springs (4) at least in the axial direction.

7. A hydraulic spring device according to patent claims 2 and 6, wherein the clamping device (44) has a clamping ring (46) which engages around inner or outer peripheral portions of the disc springs (4) and against which the support ring (10) is indirectly or directly supported.

8. A hydraulic spring device according to patent claim 7, wherein an outer support ring for spacing the disc springs (4) in the axial direction and/or for supporting the support ring (10) is supported against the clamping ring (46).

9. A hydraulic spring device according to any one of patent claims 2 to 7, wherein sealing devices (22) are arranged in the radial direction relative to the disc springs (4).

10. A hydraulic spring device according to any one of the preceding claims having damping material for reducing the transmission of structure-borne noise from adjacent structural members and to adjacent structural members.

11. A vibration protection system for damping oscillations caused via vehicles, having a supporting plate, for example a concrete slab, which is supported by at least one resilient supporting element, **characterised in that** the supporting element is a spring device (1) according to any one of the preceding claims.

## Revendications

1. Unité de ressort hydraulique présentant au moins une chambre de cylindre accueillant un moyen de pression (27), qui est raccordée à un accumulateur de moyen de pression (34) ou à une source de moyen de pression, **caractérisée par** un dispositif de précontrainte (28), au moyen duquel un élément de ressort (2) de forme circulaire limitant l'au moins une chambre de cylindre (27) peut être précontraint dans la direction axiale, et
par une plaque de dessus (14) ou une plaque de fond (20) pour fermer de façon frontale au moins une chambre de cylindre (27), dans laquelle unité la plaque de dessus (14) et la plaque de fond (20) sont liées l'une avec l'autre par l'intermédiaire du dispositif de précontrainte (28),
dans laquelle unité l'élément de ressort (2) est formé à partir d'un ensemble de ressorts, entre les éléments de type rondelle à ressort (4) desquels sont agencés des dispositifs d'étanchéité (6, 8) de forme circulaire.

2. Unité de ressort hydraulique selon la revendication 1, dans laquelle les éléments de type rondelle à ressort sont liés les uns avec les autres au moyen de bagues anti-extrusion (10).

3. Unité de ressort hydraulique selon la revendication 1 ou 2 dans laquelle les dispositifs de d'étanchéité (6,8) et les bagues anti-extrusion (10) présentent une élasticité dans la direction radiale.

4. Unité de ressort hydraulique selon l'une quelconque des revendications précédentes, dans laquelle la chambre du cylindre (27) est reliée par l'intermédiaire d'une bobine (36) avec un hydroaccumulateur (34).

5. Unité de ressort hydraulique selon l'une quelconque des revendications précédentes, dans laquelle l'élément de ressort est équipé de telle manière qu'une plaque de support d'un système de protection contre les vibrations puisse s'appuyer sur celui-ci pour un tracé des voies ou des routes.

6. Unité de ressort hydraulique selon l'une quelconque des revendications précédentes, avec un dispositif de serrage (44) pour le serrage des deux rondelles à ressort voisins (4) au moins dans la direction axiale.

7. Unité de ressort hydraulique selon la revendication 2 ou 6, dans laquelle le dispositif de serrage (44) présente une rondelle de serrage (46) entourant une section de diamètre externe ou interne de la rondelle à ressort (4), au niveau de laquelle rondelle de serrage (46) la bague anti-extrusion rondelle (10) est appuyée directement ou indirectement.

8. Unité de ressort hydraulique selon la revendication 7, dans laquelle une bague anti-extrusion externe est appuyée au niveau de la rondelle de serrage (46) pour éloigner la rondelle à ressort (4) dans la direction axiale et/ou pour soutenir la bague anti-extrusion (10).

9. Unité de ressort hydraulique selon l'une quelconque des revendications 2 à 7, dans laquelle les dispositifs d'étanchéité (22) sont agencés dans la direction radiale par rapport aux rondelles à ressort (4).

10. Unité de ressort hydraulique selon l'une quelconque des revendications précédentes, avec un matériau d'amortissement pour amortir la transmission des bruits de structure des éléments de construction voisins et vers les éléments de construction voisins.

11. Système de protection contre les vibrations pour amortir les vibrations produites par des véhicules présentant une plaque de support, par exemple, une plaque en béton qui est portée par au moins un élément de soutien faisant ressort, **caractérisé en ce que** l'élément de soutien est une unité de ressort (1) selon l'une quelconque des revendications précédentes.
